## Europäisches Patentamt

## European Patent Office

## Office européen des brevets

(19)

(11) Publication number: **0 043 646**
**B1**

(12) **EUROPEAN PATENT SPECIFICATION**

(45) Date of publication of patent specification: **23.05.84**

(51) Int. Cl.³: **C 22 B 7/00**

(21) Application number: **81302460.1**

(22) Date of filing: **03.06.81**

(54) Separation of chromium from scrap.

(30) Priority: **03.06.80 US 156131**

(43) Date of publication of application:
**13.01.82 Bulletin 82/02**

(45) Publication of the grant of the patent:
**23.05.84 Bulletin 84/21**

(84) Designated Contracting States:
**AT BE DE FR GB SE**

(56) References cited:
**EP-A-0 034 236**
**CA-A- 888 637**
**GB-A- 797 493**
**US-A-1 943 337**
**US-A-2 186 293**
**US-A-2 829 966**
**US-A-2 835 569**
**US-A-3 082 068**
**US-A-3 313 601**
**US-A-3 577 231**
**US-A-3 880 653**

**The file contains technical information
submitted after the application was filed and
not included in this specification**

(73) Proprietor: **The International Metals
Reclamation Company Inc.
Elwood City Pennsylvania 16117 (US)**

(72) Inventor: **Thomas, John Alan
Lot 10 Concession 11
Norval Ontario L0P, 1K0 (CA)**
Inventor: **Jones, David LLewelyn
314 West 28th Street
North Vancouver B.C. V7N 251 (CA)**
Inventor: **Ettel, Victor Alexander
3282 Charmaine Heights
Missisauga Ontario (CA)**

(74) Representative: **Lockwood, Barbara Ann et al
Thames House (Fifth Floor) Millbank
London SW1P 4QF (GB)**

Courier Press, Leamington Spa, England.

## Description

The present invention relates to the separation of chromium from alloy scrap in which chromium is alloyed with at least one of the metals iron, cobalt or nickel.

Chromium occurs naturally mainly as chromite ore which is found in abundance in only a few places, such as Southern Africa. However it is an important constituent of steels and of nickel-, cobalt-, molybdenum- and copper-based alloys. Since large amounts of chromium containing scrap are therefore generated a process of recovering chromium from alloy scrap is desirable.

Chromium may be recycled from stainless steel scrap without severe problems, due partly to the ability to refine in the melting vessel. Complex alloys however may contain as many as ten alloying elements and are often sensitive to contamination. Accordingly they do not lend themselves to processes involving extensive refining in the melting vessel. Producers of such complex alloys, e.g. superalloys, tend to rely on pure metals for their feed and superalloy scrap is downgraded to produce less demanding alloys.

A number of complex procedures have been proposed for separating the scrap of complex alloys, although it appears than none have yet reached production. The most relevant involve a sulphidation stage. In Japanese patent application 73—44121 the melted superalloy scrap is blown with oxygen to oxidize chromium, aluminium, titanium and silicon. After the addition of sulphur the bath is reblown whereon the chromium and iron are removed in the slag together with titanium, aluminium and silicon having nickel, cobalt, copper and sulphur in the matte.

Canadian patent 888 637 proposes a process for treating alloy scrap containing nickel, iron and chromium in which up to 12% of sulphur, in elemental or mineral form, is added to the melt prior to cooling the melt by atomisation. The granules obtained are then heated, fragmented and leached, for example with sulphuric acid to extract nickel, cobalt and copper as sulphates. Whilst not directed to extraction of chromium from scrap, US patent 3 313 601 discloses a somewhat similar process in which chromite ore is heated at 870°C in the presence of CS gas to form a mass containing chromium sulphide, iron sulphide and iron oxide. The chromium sulphide may be recovered from the residue remaining after leaching the mass with sulphuric acid.

Processes for the recovery of metals from solids in chloride solutions are also well known, generally relating to the recovery of metals from ores and matte concentrates with different combinations of leaching agents. Few references however relate to the use of chlorine and a redox couple, such as cuprous-cupric chloride couple, to leach mattes, sulphide concentrates and alloys, particularly those containing nickel, copper and the precious metals. Of those that do are U.S. patents 2 186 293, 1 943 337, 2 829 966, 2 835 569 and 3 880 653. From the latter it is inferred that nickel could not be leached from chromium since chromium is less noble than nickel.

The present invention provides a method by which the chromium in complex alloy scrap can be separated, conveniently and inexpensively, from other constituents of the scrap.

According to the present invention, a process for separating chromium from alloy scrap in which chromium is alloyed with at least one of the metals iron, cobalt or nickel and optionally copper and molybdenum comprises melting the alloy scrap with a sulphiding agent to form a sulphided matte and characterised in that the matte is cooled and fragmented and then slurried in an aqueous leaching medium containing a redox couple, agitated and maintained at an elevated temperature whilst chlorine gas is passed into the leaching medium such that the redox potential of the medium remains below 600 mV so as to dissolve metals other than chromium as chlorides and whereby undissolved sulphided chromium is recovered from the medium and chromium metal is recovered therefrom.

Advantageously the matte is fragmented by comminution, e.g. grinding, preferably to particles not more than 500 $\mu$m in diameter.

Metallographic analysis has shown that chromium is among the first elements to be sulphided, and it is apparently the behaviour of the chromium sulphide under controlled redox potential conditions that permits selective leaching to separate chromium from accompanying metals. It is essential, therefore, that the sulphidation is carried out prior to the controlled leaching.

Normally, the amount of sulphiding agent used will contain at least twice the amount of sulphur stoichiometrically required to combine with the chromium since it appears that nickel and cobalt sulphides form at about the same rate as chromium sulphide, at least in the initial stages of sulphidation.

Advantageously the amount of sulphiding agent used is such that the matte contains from 20 to 30% sulphur. This should result in complete sulphidation of the chromium and good grindability.

The sulphiding agent may be elemental sulphur, nickel, cobalt or copper sulphide, or a mixture thereof.

After cooling, the matte may be fragmented by granulation in water or grinding. The matte may be slow-cooled so that crystals of a chromium sulphide-rich phase are formed. These crystals may be physically separated from the other metal sulphide phases in the matte by magnetic separation or flotation. After separation of the two matte portions, both are subjected to leaching since the physical separation does not completely separate the chromium sulphide from the other metal sulphides.

0 043 646

Alternatively, the cooling and fragmentation may be achieved in one step by pouring molten matte into water.

The leaching medium should be maintained at a temperature in the range from 70°C to just below its boiling point and preferably in the range from 85°C to 105°C. The redox couple may for example be the cuprous-cupric couple. Alternatively, couples of iron or manganese may be used. Preferably the rate of chlorine addition to the medium is such that the redox potential is maintained in the range from 250 to 550 mV and more preferably at about 400 mV. During the leaching nickel, cobalt, iron, molybdenum, copper and other metals are dissolved as chlorides whilst most of the chromium is retained as undissolved sulphide. If the redox potential during leaching is not maintained below 600 mV the leach will not be selective and a substantial amount of chromium will go into solution. Chromium may be recovered from the undissolved solids by roasting the chromium sulphide in the presence of oxygen to produce chromium oxide which is reduced to yield metallic chromium by melting with aluminium. The leach solution may be treated to recover dissolved metals such as copper, iron, nickel and cobalt by conventional means. After carrying out a leach, a typical treatment route for the solution would be to remove the copper by cementation on fresh matte, hydrolyse the iron, molybdenum and chromium with a base such as nickel carbonate, extract cobalt by ion exchange or solvent extraction, and electrowin nickel. The copper-containing residue would revert to the chlorine leach. The iron-molybdenum-chromium cake could be used directly as a steel making additive or processed further to recover chromium and molybdenum. Cobalt extracted by ion exchange or solvent extraction could be removed by stripping the resin or solvent.

The invention will now be further described by reference to some examples in which all percentages given are percentages by weight.

Example I

A superalloy matte was prepared using excess sulphur as described above and analysed as follows:

| Ni | Cr | Co | Fe | Mo | S |
|---|---|---|---|---|---|
| 58.1% | 8% | 3.1% | 5.2% | 0.38% | 22.5% |

The matte was ground to pass a 0.3 mm mesh and slurried with an aqueous solution containing 10 grams/litre of copper and 80 grams/litre of nickel in an initial solids concentration of 144 grams/litre. It will be appreciated by those skilled in the art that a return aqueous stream containing nickel chloride would be used in the leaching, hence the presence of the nickel. The copper was included in the solution to establish a cuprous-cupric couple. This leaching medium was used in all the examples.

Chlorine gas was bubbled through the slurry for 3 hours. The slurry was maintained at a temperature between 80°C and 95°C and the chlorine feed rate was selected to provide a redox potential of about 550 mV.

Extractions of metal values into the leach solution were as follows:

| Ni | Cr | Co | Fe | Mo |
|---|---|---|---|---|
| 88% | 13.4% | 72.7% | 74.1% | 57% |

Example II

The procedure of Example I was repeated using the same matte but the redox potential was not controlled and in fact a potential of >900 mV was reached.

Extractions of the metal values into the leach solution were as follows:

| Ni | Cr | Co | Fe | Mo |
|---|---|---|---|---|
| 99.3% | 70.4% | 93.4% | 92.2% | 86.1% |

It may be seen that the result of not controlling the redox potential was to render the leach non-selective.

Example III

Matte produced by sulphidizing superalloy scrap was slowly cooled from the molten state, ground and subjected to flotation and magnetic separation. The resulting separated solids were analyzed and found to have the following composition:

| Ni | Cr | Co | Fe | Mo |
|---|---|---|---|---|
| 38.3% | 18.4% | 2.1% | 2.8% | 2.3% |

3

The solids were ground to pass 48 mesh and mixed with an aqueous solution to initial solids concentration of 120 grams/litre.

Chlorine gas was bubbled through the solution for 3 hours at a temperature in the range from 80° to 95°C and at such a rate as to provide a redox potential of about 550 mV.

After leaching, extraction of metal values into the leach solution was as follows:

|  | Ni | Cr | Co | Fe | Mo |
|---|---|---|---|---|---|
| Leach Extraction % | 60 | 9.3 | 24.3 | 15.5 | 33 |
| Residue Analysis % | 20 | 21.7 | 1.9 | 1.7 | 2.1 |

It may be seen that the Ni:Cr ratio in the feed was about 2:1 whereas the ratio in the solids after leaching was about 1:1.

Example IV

The feed of Example III was prepared and leached in the same manner as described in Example III except that the redox potential was not controlled and in fact a potential of >900 mV was reached. When leaching was completed the following recovery figures were obtained:

|  | Ni | Cr | Co | Fe | Mo |
|---|---|---|---|---|---|
| Leach Extraction % | 96 | 71.2 | 78.6 | 89 | 93 |
| Residue Analysis % | 7.7 | 27.9 | 1.7 | 1.7 | 1 |

It may be seen that the result of not controlling the redox potential was again to render the leach non-selective.

Example V

Further tests made in leaching the feed matte of Example I at 100°C, a copper concentration of 10 grams/litre and with chlorine introduction controlled to give redox potentials of 400 mV and 700 mV for 2 hours, respectively, gave the following results:

```
Redox Potential: 400 mV    Ni ext.=97.8%
                           Cr ext.= 4.6%
Redox Potential: 700 mV    Ni ext.=97.5%
                           Cr ext.=49.7%
```

It will be seen that even a slight departure from the 600 mV maximum redox potential according to the present invention affects the selectivity of the leach.

**Claims**

1. A process for separating chromium from alloy scrap in which chromium is alloyed with at least one of the metals iron, cobalt or nickel and optionally copper and molybdenum comprising melting the alloy scrap with a sulphiding agent to form a sulphided matte and characterised in that the matte is cooled and fragmented and then slurried in an aqueous leaching medium containing a redox couple, agitated and maintained at an elevated temperature whilst chlorine gas is passed into the leaching medium such that the redox potential of the medium remains below 600 mV so as to dissolve metals other than chromium as chlorides and whereby undissolved chromium sulphide is recovered from the medium and chromium metal is recovered therefrom.

2. A process as claimed in claim 1 in which the sulphiding agent is elemental sulphur, nickel sulphide, cobalt sulphide, copper sulphide or a mixture thereof.

3. A process as claimed in claim 1 or claim 2 in which the amount of sulphiding agent used contains at least twice the amount of sulphur stoichiometrically required to combine with the chromium in the alloy scrap.

4. A process as claimed in any preceding claim, further comprising the step of recovering dissolved metals from the leach medium.

5. A process as claimed in any preceding claim in which the redox couple is a cuprous-cupric couple.

6. A process as claimed in claim 5 in which the copper content of the leach medium is 10 grams/litre.

7. A process as claimed in any preceding claim, wherein the leaching medium is maintained at a temperature in the range from 70°C to just below its boiling point.

4

8. A process as claimed in claim 7 wherein the leaching medium is maintained at a temperature in the range from 85°C to 105°C.

9. A process as claimed in any preceding claim, in which the redox potential of the leaching medium is maintained in the range from 250 mV to 550 mV.

10. A process as claimed in claim 9 in which the redox potential of the leaching medium is maintained at 400 mV.

11. A process as claimed in any preceding claim, in which the matte is fragmented by comminution.

12. A process as claimed in claim 11, in which the matte is comminuted to particles not greater than 500 $\mu$m in diameter.

13. A process as claimed in claim 11 or 12 in which the molten matte is slow cooled so as to produce chromium sulphide crystals in the solidified matte.

14. A process as claimed in claim 13, in which the crystals are physically separated from the remainder of the matte and then both crystals and remainder are leached.

## Patentansprüche

1. Ein Verfahren zum Trennen von Chrom von Legierungsschrott, in dem Chrom mit mindestens einem der Metalle Eisen, Kobalt und Nickel und wahlweise Kupfer und Molybdän legiert ist, bestehend aus dem Schmelzen des Legierungsschrotts mit einem Sulfidiermittel, um einen sulfidierten Stein zu bilden, und dadurch gekennzeichnet, daß der Stein gekühlt und zertrümmert und dann aufgeschlämmt wird in einem wässerigen Auslaugmedium, das ein Redoxpaar enthält, und sodann gerührt und auf einer erhöhten Temperatur gehalten wird, während Chlorgas in der Weise durch das Auslaugmedium geleitet wird, daß das Redoxpotential unter 600 mV bleibt, um andere Metalle als Chrom als Chloride aufzulösen, und wodurch ungelöstes Chromsulfid aus dem Medium und Chrommetall davon zurückgewonnen wird.

2. Ein Verfahren nach Anspruch 1, in dem das Sulfidiermittel elementarer Schwefel, Nickelsulfid, Kobaltsulfid, Kupfersulfid oder eine Mischung davon ist.

3. Ein Verfahren nach Anspruch 1 oder 2, in dem die Menge des verwendeten Sulfidiermittels mindestens die doppelte Menge des Schwefels enthält, die stöchiometrisch erforderlich ist, um sich mit dem Chrom in dem Legierungsschrott zu verbinden.

4. Ein Verfahren nach einem der vorhergehenden Ansprüche, das weiterhin den Arbeitsschritt der Zurückgewinnung gelöster Metalle aus dem Auslaugmedium umfaßt.

5. Ein Verfahren nach einem der vorhergehenden Ansprüche, in dem das Redoxpaar ein Cu(I)/Cu(II)-Paar ist.

6. Ein Verfahren nach Anspruch 5, in dem der Kupfergehalt des Auslaugmediums Gramm/Liter beträgt.

7. Ein Verfahren nach einem der vorhergehenden Ansprüche, in dem das Auslaugmedium auf einer Temperatur im Bereich von 70°C bis unmittelbar unter seinem Siedepunkt gehalten wird.

8. Ein Verfahren nach Anspruch 7, in dem das Auslaugmedium auf einer Temperatur im Bereich von 85°C bis 105°C gehalten wird.

9. Ein Verfahren nach einem der vorhergehenden Ansprüche, in dem das Redoxpotential des Auslaugmediums im Bereich von 250 bis 550 mV gehalten wird.

10. Ein Verfahren nach Anspruch 9, in dem das Redoxpotential des Auslaugmediums auf 400 mV gehalten wird.

11. Ein Verfahren nach einem der vorhergehenden Ansprüche, in dem der Stein durch Zerkleinerung fragmentiert wird.

12. Ein Verfahren nach Anspruch 11, in dem der Stein zu Partikeln von nicht größer als 500 um Durchmesser zerkleinert wird.

13. Ein Verfahren nach Anspruch 11 oder 12, in dem der geschmolzene Stein langsam abgekühlt wird, um Chromsulfidkristalle in dem verfestigten Stein zu produzieren.

14. Ein Verfahren nach Anspruch 13, in dem die Kristalle vom Rest des Steins physikalisch getrennt und dann sowohl die Kristalle wie auch der Rest ausgelaugt werden.

## Revendications

1. Un procédé pour séparer du chrome à partir de mitraille d'alliage dans laquelle du chrome est allié avec au moins un des métaux suivants: fer, cobalt ou nickel et, éventuellement, du cuivre et du molybdène, comprenant une fusion de la mitraille d'alliage avec un agent de sulfuration pour former une matte sulfurée, et caractérisé en ce que la matte est refroidie, fragmentée, réduite ensuite en pâte dans un milieu de lixiviation aqueux contenant un couple rédox, agitée et maintenue à une température élevée tandis qu'on fait passer du chlore gazeux dans le milieu de lixiviation dont le potentiel rédox du milieu reste en dessous de 600 mV de façon à dissoudre les métaux autres que le chrome sous forme de chlorures, et de façon que soit récupéré le sulfure de chrome non dissous à partir du milieu et que ce métal chrome soit récupéré à son tour du sulfure de chrome.

2. Un procédé selon la revendication 1, dans lequel l'agent de sulfuration est du soufre élémentaire, du sulfure de nickel, du sulfure de cobalt, du sulfure de cuivre ou un mélange de ceux-ci.

3. Un procédé selon les revendications 1 ou 2, dans lequel la quantité d'agent de sulfuration utilisée contient au moins deux fois la quantité de soufre nécessaire d'un point de vue stoechiométrique pour se combiner avec le chrome dans la mitraille d'alliage.

4. Un procédé selon l'une des revendications précédentes, comprenant de plus l'étape de récupération des métaux dissous à partir du milieu de lixiviation.

5. Un procédé selon l'une des revendications précédentes, dans lequel le couple rédox est un couple cuivreux-cuivrique.

6. Un procédé selon la revendication 5, dans lequel la teneur en cuivre du milieu de lixiviation est 10 grammes/litre.

7. Un procédé selon l'une des revendications précédentes, dans lequel le milieu de lixiviation est maintenu à une température comprise dans l'intervalle de 70°C à juste en dessous de sont point d'ébullition.

8. Un procédé selon la revendication 7, dans lequel le milieu de lixiviation est maintenu à une température dans l'intervalle de 85°C à 105°C.

9. Un procédé selon l'une des revendications précédentes, dans lequel le potentiel rédox du milieu de lixiviation est maintenu dans l'intervalle de 250 mV à 550 mV.

10. Un procédé selon la revendication 9, dans lequel le potentiel rédox du milieu de lixiviation est maintenu à 400 mV.

11. Un procédé selon l'une des revendications précédentes, dans lequel la matte est fragmentée par comminution.

12. Un procédé selon la revendication 11, dans lequel la matte est fragmentée par comminution en particules d'un diamètre n'excédant pas 500 $\mu$m.

13. Un procédé selon les revendications 11 ou 12, dans lequel la matte fondue est lentement refroidie de façon à produire des cristaux de sulfure de chrome dans la matte solidifiée.

14. Un procédé selon la revendication 13, dans lequel les cristaux sont séparés physiquement du reste de la matte, les cristaux et le reste étant ensuite tous deux lessivés.